# EUROPEAN PATENT SPECIFICATION

(11) **EP 3 350 117 B1**
(45) Date of publication and mention of the grant of the patent: **28.08.2019**
(21) Application number: 16766932.4
(22) Date of filing: 14.09.2016
(51) Int. Cl.: B82Y 20/00, G01N 21/552, G01N 21/77, B82Y 30/00

(54) **END-CAP SUITABLE FOR OPTICAL FIBER DEVICES AND NANOPLASMONIC SENSORS**
ENDKAPPE FÜR GLASFASERVORRICHTUNGEN UND NANOPLASMONISCHE SENSOREN
CAPUCHON D'EXTRÉMITÉ POUR DISPOSITIFS DE FIBRES OPTIQUES ET CAPTEURS NANOPLASMONIQUES

(30) Priority: 15.09.2015 SE 1551182
(43) Date of publication of application: 25.07.2018
(73) Proprietor: Arguseye AB, 583 36 Linköping (SE)
(72) Inventor: MARTINSSON, Erik, 583 36 Linköping (SE); LUNDSTRÖM, Ingemar, 582 52 Linköping (SE); AILI, Daniel, 583 36 Linköping (SE)
(74) Representative: Bergenstråhle Group AB
(86) International application number: PCT/EP2016/071720
(87) International publication number: WO 2017/046179

(56) References cited:
- EP-A2- 0 965 835
- US-A1- 2006 240 573
- US-A1- 2009 002 701
- US-A1- 2010 179 436
- US-A1- 2011 090 506
- US-A1- 2014 211 206
- YUN LIU ET AL: "Surface Plasmon Resonance Biosensor Based on Smart Phone Platforms", SCIENTIFIC REPORTS, vol. 5, 10 August 2015 (2015-08-10), page 12864, XP055314340, DOI: 10.1038/srep12864

## Description

### TECHNICAL FIELD

The present invention relates to an end-cap for being connected to an optical fiber of a localized surface plasmon resonance (LSPR) sensor wherein the end-cap comprises a reflecting surface, a compartment and nanoparticles. Moreover, the present invention further relates to an optical fiber device, LSPR sensor or LSPR biosensor comprising said end-cap. Furthermore, the present invention relates to said end-cap being connected to an optical fiber.

### BACKGROUND OF THE INVENTION

Sensors and biosensor which would enable sensitive real-time monitoring of concentration or activity of biomarkers *in vivo* would be a game-changer in drug development and for diagnosis. Current sensor technologies at the market rely on *ex situ* analysis of extracted samples, which severely limits both the applicability and information that can be obtained. Despite the shortcomings, biosensors and bioassays that can detect analytes and biomolecular interactions are widely used.

Benchtop biosensor instruments for *ex situ* analysis of biomolecular interactions, such as Biacore (GE Healthcare) and Q-Sense (Biolin Scientific), are also widely used in biotech and pharma industry, as well as by academic researcher for screening and evaluation of drug candidates, antibody epitope mapping, off-line monitoring of bioreactors, and characterization of biomarkers and biomolecular interactions in general. Biosensors for diagnostics are typically housed in centralized laboratories due to high costs and complex sample handling and data interpretation.

Large efforts to miniaturize biosensors for biomolecular interactions have been made, but so far no sensor technology has been presented that enable *in situ* and/or *in vivo* detection of analytes with sufficiently high sensitivity. A sensor capable of *in situ* analysis would enable on-line monitoring of bioprocesses, water and food quality, *in vivo* diagnostics and real-time detection of disease biomarkers, just to mention a few examples.

Nanoplasmonic sensing using localized surface plasmon resonance (LSPR) created in metal nanoparticles structures has previously been used to detect small, local variations in the refractive index close to the metal nanoparticles by monitoring their interaction with electromagnetic radiation, i.e. light [1-3]. When molecules such as biomolecules bind to the surface of the metal nanoparticles, a change in the signal output can be detected which is proportional to the amount of biomolecules present in the sensing volume around the nanoparticles [1-3]. This enables the production of label-free, real-time sensors and biosensors.

There are some examples where metal nanoparticles or lithographic nanostructures have been deposited or immobilized onto the tip of cleaved optical fibers and used for sensing applications [1-3]. All of the reports utilize backscattered light originating from the nanoparticles or nanostructures for analysis which gives a rather weak and noisy signal. Consequently, one of the disadvantages with prior art technologies is that their performances are rather poor.

A further disadvantage with prior art technologies is that, after being used optical fibers have to either be discarded or further cleaved. This disadvantage give rise to high costs (due to discarding optical fibers) and time-consuming procedures (due cleaving the tips of optical fibers), especially when a large number of qualitative and/or quantitative analysis has to be conducted.

EP0965835 describes a sensor where beads of polymers, such as polystyrene, are adsorbed on a reflective substrate and then coated by a metal, such as gold. Said nanomaterials differ from the ones according to the invention in that they are not nanoparticles but prepared by forming a thin discontinuous metal film using said beads. Disadvantages of this prior art technology are: low refractive index sensitivity (63 nm per refractive index unit), time consuming and expensive fabrication due to multiple steps including bead and metal deposition to form said film, said film is also tethered closely to the substrate lowering the refractive index sensitivity due to substrate effects.

US2014/211206 disclosed an apparatus illustrated in Figures 1A and 1B for collecting a material to be spectrally analyzed and a method for fabricating the apparatus. The material collecting apparatus includes a body having a first end and a second end, in which the body is elongated along a first axis from the first end to the second end. The body includes a perimeter wall surrounding a hollow core wherein the hollow core may be formed by an interior surface of the perimeter wall. The perimeter wall extends along an axis from the first end to the second end. In addition, a hole having an opening formed in an external surface of the body at a location between the first end and the second end and extending at least partially through the body at an angle with respect to the first axis may be formed in the body. Moreover, a plurality of surface-enhanced spectroscopy (SES) elements may be positioned inside the body. The SES elements include elements, such as plasmonic nanoparticles or nanostructures, which may include plasmon-supporting materials such as but not limited to, gold (Au), silver (Ag), and copper (Cu). The interior surface of the perimeter wall, which may also include an interior surface of the cover, may be reflective. Furthermore, an optical fiber may be connected to the second end of the apparatus.

US2010/179436 discloses a Raman spectroscopy system comprising an optical probe head using near-field Surface Enhanced Raman Spectroscopy (SERS) technology to identify the molecular signature of biological cells. The optical probe head is connected to an optical fiber, the probe comprising a reflecting metal layer and a carrying substrate forming a compartment between fiber portion and substrate to hold metallic nanosized beads at the surface of fiber portion.

US2011/090506 discloses a self-generating fiber-optic localized plasmon resonance device. The fiber-optic localized plasmon resonance device is used in a micro sample tray acting as an end-cap for optical fibers. A reference optical fiber and a sensing optical fiber may be construed with a mirror at the distal end face of the optical fiber so as to reflect the first localized plasmon reference sensor signal and the second localized plasmon resonance sensor signal. A filter membrane is forming a compartment between the sensing portions of the fibers and membrane. The sensing portion of the optical fibers comprises noble metal nanoparticle layers.

One of the most frequently employed methods to functionalize nanoparticles immobilized on the tip of optical fibers is the usage of thiol chemistry [1]. Thiol groups (-SH) form covalent bonds with the atoms of the nanoparticle forming a self-assembled monolayer (SAM) on gold surfaces. As thiols are present in, or can be introduced into several different classes of molecules (such as nucleotides, antibodies, enzymes and polypeptides), nanoparticles such as gold nanoparticles can easily be functionalized with a large variety of biomolecules. Such molecules can be used as ligands to monitor binding of analytes. To reuse the sensor surface, the analyte must be removed from the ligand. This process, often called regeneration, typically involves exposing the sensor surface to buffers with high or low pH, high ionic strength, heat or detergents, or combinations thereof, depending on the nature of the interaction between ligand and analyte. The need to regenerate the sensor surface by such means severely limits the possibility to carry out continuous or repeated monitoring of ligand-analyte binding *in situ,* and require removal of the optical fiber from the site of measurement.

A further disadvantage with prior art technologies is that researchers specialized in the analytes to be detected such as biomolecules, have to prepare and immobilize the nanoparticles [1-3]. The disadvantage of this is that the accuracy and precision of preparing and immobilizing nanoparticles might not be that high since these steps usually do not fall within the field of expertise of said researchers. Consequently, it would be more advantageous if said researchers could purchase an arrangement, device, sensor or biosensor comprising immobilized nanoparticles.

Consequently, there is a need to eliminate the disadvantages of the above discussed prior technologies to enable convenient fiber optics-based LSPR sensing with high sensitivity.

### OBJECT OF THE INVENTION

The first object of the present invention is to provide a LSPR sensor for *in situ* and/or *in vivo* detection of analytes. The second object of the present invention is to provide a LSPR sensor for *in situ* and/or *in vivo* detection of analytes with high sensitivity. The third object of the invention is to eliminate the need of discarding and cleaving optical fibers. Moreover, the fourth object of the invention is to eliminate the need of discarding functionalized sensor probes and to enable continuous or repeated monitoring of ligand-analyte binding events *in situ* and/or *in vivo.* Furthermore, the fifth object of the invention is to facilitate the development of a biosensor that can be miniaturized.

### SUMMARY OF THE INVENTION

The objects of the invention are solved by the subject-matters disclosed by the claims.

The preferred embodiment of the present invention relates to an end-cap for being fitted to an optical fiber wherein the end-cap comprises the features according to independent claim 1. Incoming light, guided through an optical fiber, passes the nanoparticles and is reflected from the reflecting surface passing the nanoparticles once again and finally guided through an additional optical fiber to a detector. The signal is analyzed and the response is plotted in real-time. By using a reflective surface, the output signal can be significantly improved compared to existing LSPR-based fiber optics sensors, which lowers the detection limit. The reason for the improved signal is that, not only is both the scattering and absorption components in the LSPR signal taken into account, but the light also pass the nanoparticle layer twice.

As defined by the independent claim, the end-cap comprises an arrangement for heating the end-cap. Apart from the advantages of the end-cap described in the above paragraph, the heating enables thermal regeneration of sensor surface, i.e. recycling and reuse of the functionalized sensor probe. According to the preferred embodiment, said thermal regeneration is induced by optical or resistive heating. According to a further preferred embodiment, said thermal regeneration is provided by an integrated electric circuit for inducing resistive heating.

According to the preferred embodiment, the plasmonic nanoparticles are selected from lithographic metal nanostructures, colloidal metal nanoparticles and semiconductor nanocrystals, or a combination thereof.

According to the preferred embodiment, the nanoparticles are immobilized on a surface.

According to the preferred embodiment, said nanoparticles are immobilized on the surface of a substrate, wherein said substrate is removable, and wherein said substrate is transparent.

According to an example, not covered by the claimed invention, said nanoparticles are immobilized on the reflecting surface.

According to an example, not covered by the claimed invention, said nanoparticles are dispersed in the inner compartment of said end-cap.

According to an example, not covered by the claimed invention, said nanoparticles are dispersed in a gel in the compartment of said end-cap.

According to a further preferred embodiment, said compartment is sealed with a membrane, wherein said membrane is preferably selected from a permeable membrane, a semi-permeable membrane and dialysis membrane, and wherein membrane is inside or outside of the end-cap housing.

According to a further preferred embodiment said compartment is itself comprised of a permeable membrane or semi-permeable membrane.

According to the preferred embodiment said nanoparticles are lithographic metal nanostructures or metal nanoparticles.

According to a further preferred embodiment, said reflective surface comprises metal, polymer and/or glass, and wherein said metal is selected from silver, gold and aluminum.

According to an example, not falling in the scope of the claimed invention, a transparent organic or inorganic film separates said nanoparticles from the reflective surface, and wherein said film binds said nanoparticles.

According to an example, said nanoparticles are lithographic nanostructures or colloidal nanoparticles.

According to a further preferred embodiment, said nanoparticles are metal nanoparticles, preferably selected from are gold, silver, aluminum, copper platinum and palladium nanoparticles, or combinations thereof.

According to a further preferred embodiment, said nanoparticles are gold and/or silver nanoparticles.

According to an example, not falling in the scope of the claimed invention, said nanoparticles are semiconductor nanocrystals which exhibit plasmonic properties by the introduction of charge carriers through doping.

According to a further preferred embodiment, the shape of the nanoparticles is selected from a sphere, rod, disk, triangle, cube, star, plate, prism, ellipse, wire, shell, core-shell, rice, ring, or hole in a metal film.

According to an example, not falling in the scope of the claimed invention, holes created in a metal film may act in the same way as nanoparticles.

According to an example, not falling in the scope of the claimed invention, the size of the nanoparticles is 5-250 nm.

According to a further preferred embodiment, said end-cap is used for *in vivo* or *in situ* qualitative and quantitative analysis.

According to a further preferred embodiment, said end-cap is removable.

The object of the invention is also solved by a LSPR sensor.

According to a preferred embodiment, said LSPR sensor comprises an end-cap described in the above preferred embodiments.

According to an example, said LSPR sensor comprises a detector, at least one optical fiber, light source, wherein said end-cap is located at the end of said at least one optical fiber.

According to an example, said LSPR sensor comprises:
- a light source which is arranged to transmit light in the visible or in the near-infrared region,
- at least one optical fiber which is arranged to guide the light to the end-cap in which the light passes through the nanoparticles,
- a reflecting surface which is arranged to reflect said light, wherein the light once again passes the nanoparticles and reaches the detector via at least one optical fiber,
- a detector which is arranged to detect the light reflected from the end-cap.

According to an example, said LSPR sensor further comprises a second light source (such as laser) for inducing optical heating of the end-cap, wherein the wavelength of the second light source is configured to overlap with the plasmonic band of the nanoparticles.

According to an example, said LSPR sensor is portable and compact.

According to an example, said LSPR sensor is for *in vivo* or *in situ* quantitative and qualitative analysis.

The object of an example is also solved by the use of an end-cap according to the above preferred embodiments in a LSPR sensor described above.

According to an example, said use the end-cap is for *in vivo* or *in situ* quantitative and qualitative analysis.

The object of the invention is also solved by an end-cap connected to an optical fiber, wherein said end-cap is according to any one of the above preferred embodiments.

According to an example, not falling in the scope of the claimed invention, said end-cap connected to an optical fiber comprises nanoparticles which are immobilized on the distal end of the optical fiber.

The object of the invention is also solved by an optical fiber device comprising an end-cap according to any one of the above preferred embodiments.

According to a preferred embodiment, said optical fiber device comprises an end-cap described in the above preferred embodiments.

According to a preferred embodiment, said optical fiber device comprises a detector, at least one optical fiber, light source, wherein said end-cap is located at the end of said at least one optical fiber.

According to a preferred embodiment, said optical fiber device comprises:
- a light source which is arranged to transmit light in the visible or in the near-infrared region,
- at least one optical fiber which is arranged to guide the light to the end-cap in which the light passes through the nanoparticles,
- a reflecting surface which is arranged to reflect said light, wherein the light once again passes the nanoparticles and reaches the detector via the at least one optical fiber,
- a detector which is arranged to detect the light reflected from the end-cap.

According to a preferred embodiment, said optical fiber device further comprises a second light source (such as laser) for inducing optical heating of the end-cap, wherein the wavelength of the second light source is configured to overlap with the plasmonic band of the nanoparticles.

According to an example, said optical fiber device is portable and compact.

According to an example, said optical fiber device is for *in vivo* or *in situ* quantitative and qualitative analysis.

### BRIEF DESCRIPTION OF THE DRAWINGS

Figure 1 shows an example of an optical instrumentational setup that can be used in combination with the end-cap.
Figure 2A shows a schematic illustration of an end-cap connected to the end of an optical fiber with nanoparticles (not to scale) immobilized on a reflective surface.
Figure 2B shows a schematic illustration of an end-cap connected to the end of an optical fiber with a nanostructured surface (not to scale) created on a reflective surface.
Figure 3A shows a schematic illustration of an examplary end-cap connected to the end of an optical fiber with nanoparticles (not to scale) located directly on a reflective surface.
Figure 3B shows a schematic illustration of an end-cap according to the claimed invention connected to the end of an optical fiber with nanoparticles (not to scale) located on a substrate placed on top of the reflective surface.
Figure 3C shows a schematic illustration of an exemplary end-cap connected to the end of an optical fiber with dispersed nanoparticles (not to scale) located inside the compartment of the end-cap.
Figure 3D shows a schematic illustration of an exemplary end-cap connected to the end of an optical fiber with nanoparticles (not to scale) located at the distal end of the optical fiber.
Figure 4 shows one example of an end-cap prototype where a substrate, coated with nanoparticles (not to scale), is placed on top of a reflective surface.
Figure 5 shows a schematic illustration of an end-cap with an integrated electric circuit used for thermal regeneration.
Figure 6 shows light extinction spectra of a signal (I) obtained in water using an end-cap prototype with an integrated substrate covered with gold nanospheres (Au-NP, diameter 50 nm), and a signal (II) obtained in water from a free optical fiber with gold nanospheres immobilized directly to the end of the optical fiber core. Y-axis: light extinction (arbitrary unit, arb.u). A measurement with nanoparticles is compared to a measurement without nanoparticles. X-axis: light wavelength (nanometer, nm).
Figure 7A shows light extinction spectra obtained in air using an end-cap prototype with an integrated substrate covered with gold nanospheres (Au-NP, diameter 50 nm), before (III) and after (IV) addition of a protein (Bovine Serum Albumine, BSA). Y-axis: light extinction (arbitrary unit, arb.u). A measurement with nanoparticles is compared to a measurement without nanoparticles. X-axis: light wavelength (nanometer, nm)
Figure 7B shows a zoom-in of the spectra in FIG. 7A with normalized intensity to demonstrate the wavelength shift of the plasmon peak position that occurs after addition of BSA. Y-axis: light extinction (arbitrary unit, arb.u). A measurement with nanoparticles is compared to a measurement without nanoparticles. X-axis: light wavelength (nanometer, nm).
Figure 7C shows adsorption of BSA (0.5 mg/ml in water, Sigma-Aldrich) to gold nanospheres (Au-NP, diameter 50 nm) acquired in real-time using an end-cap prototype. Y-axis: change in plasmon peak maximum position (response, Δnm). X-axis: time (seconds, s)
Figure 8 shows binding curves of immunoglobulin G (IgG) on gold nanospheres (Au-NP, diameter 50 nm) functionalized with a peptide receptor for three different concentrations of IgG, 100 nM (VI), 50 nM (VII) and 25 nM (VIII). Y-axis: change in plasmon peak maximum position (response, Δnm). X-axis: time (seconds, s)
Figure 9 shows a schematic illustration of an end-cap connected to an optical fiber integrated in a bioreactor chamber for real-time, in situ monitoring.

### DETAILED DESCRIPTION

The present invention relates to an end-cap and an optical instrumentation setup that will be central to realizing sensor and biosensor systems capable of real-time *in situ* and *in vivo* optical detection of analytes. Moreover, the present invention relates to a technique that enable miniaturization of a biosensor to fit the essential sensing components in an end-cap which is suitable for being connected to the tip of an optical fiber.

The present invention exploits plasmonic nanoparticles, such as gold nanoparticles (Au-NP), with pronounced localized surface plasmon resonance bands. The resonance conditions are very sensitive to local changes in refractive index, caused by *e.g.* binding of biomolecules close to the nanoparticle surface. In the present invention, the LSPR phenomena is excited with a relatively simple and inexpensive optical equipment combined with small optical fibers which enable the construction of a miniaturized sensing system. This refractometric sensing technology based on nanoparticles, such as metal nanoparticles, is highly generic and specificity are attained by attaching capture molecules on, or close to, the surface of the nanoparticles. Consequently, the sensor system according to the present invention can be addressed towards various molecular and biomolecular targets by changing the capture molecules (ligands) on the nanoparticles.

Previous attempts in prior art technologies to combine plasmonic nanoparticles and optical fibers, have resulted in poor signal-to-noise ratio, and hence low sensitivity. The main reason being that only a very limited amount of the light is scattered back from the nanoparticles into the optical fiber to reach the detector. The present invention has significantly improved this technology by placing, depositing or immobilizing plasmonic nanoparticles in a removable "end-cap" having a reflective surface. Consequently, the present invention ensures that as much as possible of the light that interacts with the nanoparticles reaches the detector. Hence, an improved signal-to-noise ratio is attained which significantly improves the sensitivity of the system.

### Optical instrumentation setup (optical fiber device)

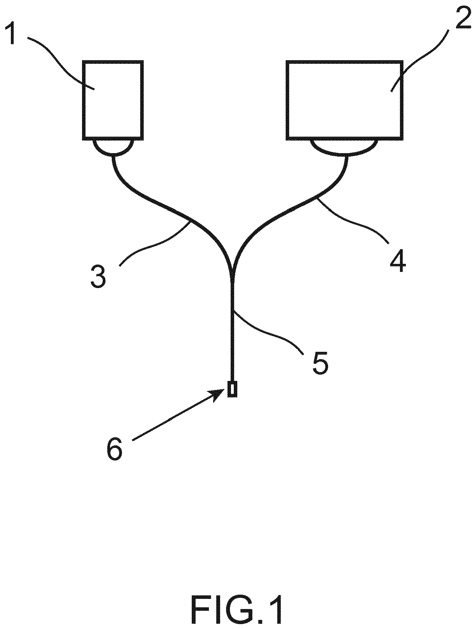

Figure 1 illustrates an example of an optical instrumentation setup according to the present invention which may be used in combination with an end-cap. Such an optical instrumentation setup comprises a light source (1) that produces light in the visible and or in the near-infrared region and can be connected to an optical fiber (3). The setup further comprises a detector (2) which is connected to an optical fiber (4). The detector may be any light detector or spectrophotometer that can detect light in the visible and/or in the near-infrared region and can be connected to an optical fiber. Optical fibers (3) and (4) are connected to one end of optical fiber (5) via a 2x1 optical coupler (not shown) while the other end of optical fiber (5) is connected to an endcap (6). Moreover, the end-cap is configured to be removable from the optical instrumentation setup.

Hence, in the above described setup, the light source (1) is arranged to transmit light in the visible or in the near-infrared region and the optical fibers (3, 4) are arranged to guide the light to the end-cap (6) in which the light passes through the nanoparticles (7). Since, the reflecting surface (8) is arranged to reflect the light, the light once again passes the nanoparticles (7). The light reaches the detector (2) via the optical fiber (5) and the detector is arranged to detect the light reflected from the end-cap.

Any optical fiber having a core diameter of 1µm-5000µm and that can guide light in the visible and/or in the near-infrared region may be used in the optical instrumentational setup according to the present invention. The fibers can be single fibers connected with a 2x1 optical fiber coupler as in the above example, or alternatively, a bifurcated fiber that consist of two or more optical fibers. The choice of optical fibers and fiber connections are important for minimizing signal losses in the system and thereby maximizing the signal output. The fiber end can be free or terminated with an optical connector (i.e. SMA or FC/PC).

The instrumentational setup can be used for *in vivo* or *in situ* qualitative and quantitative analysis. Moreover, the instrumentational setup can be used as a LSPR sensor or LSPR biosensor.

### End-cap

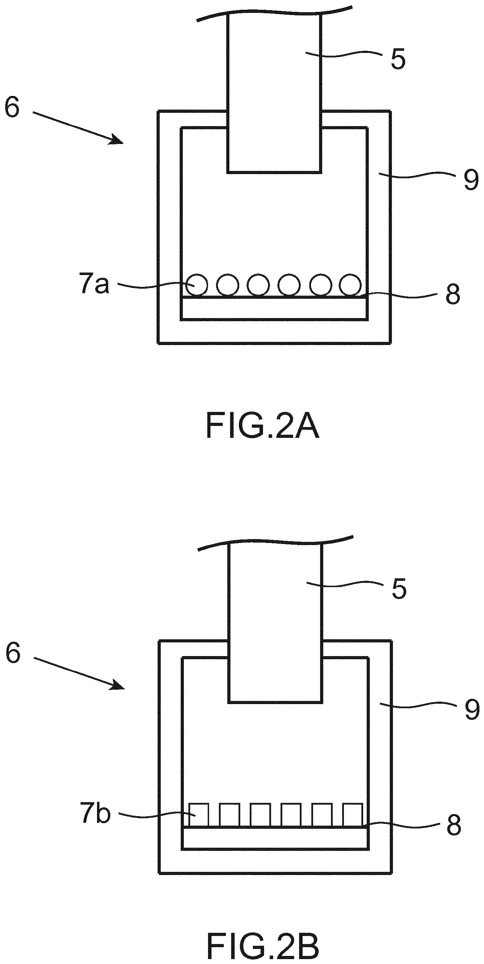

The end-cap is the sensing arrangement of the optical instrumentation setup describe above. An end-cap (6) according to an example comprises plasmonic nanoparticles (7) and as illustrated in Fig. 2A and 2B said nanoparticles may be colloidal nanoparticles (7a) and lithographic nanostructures (7b), respectively. The end-cap (6) further comprises a reflective surface (8). The nanoparticles (7) and the reflective surface (8) are housed in an end-cap housing (9) and the end-cap is configured to be removably connected to an optical fiber (5) via a connector arrangement. The space inside the end-cap housing is referred to as a compartment in the present disclosure. The reflective surface can be made of metal, polymer and/or glass. The metal is preferably selected from silver, gold and aluminum. Plasmonic nanoparticles (7) can be prepared by traditional lithographic techniques, colloidal lithography, or nanosphere lithography yielding plasmonic nanostructures or by synthesis of colloidal metal nanoparticles. The latter typically render a suspension of nanoparticles that are dispersed in a liquid (aqueous medium or organic solvent).

### Nanoparticles

End-cap according to the present invention can comprise plasmonic nanoparticles which are either metal nanoparticles or non-metallic nanoparticles or lithographic metal nanostructures that gives rise to LSPR.

The metal nanoparticles may be selected from are gold, silver, aluminum, copper, platinum and/or palladium. The shape of the nanoparticles can be a sphere, rod, disk, triangle, cube, star, plate, prism, ellipse, wire, shell, core-shell, rice, ring or hole in a metal film. The size of the nanoparticles may be 5-250 nm.

Non-metallic materials can be semiconductor nanocrystals which exhibit plasmonic properties by the introduction of charge carriers through doping.

### Arrangement of nanoparticles

The end-cap may comprise various arrangements of nanoparticles in the compartment.

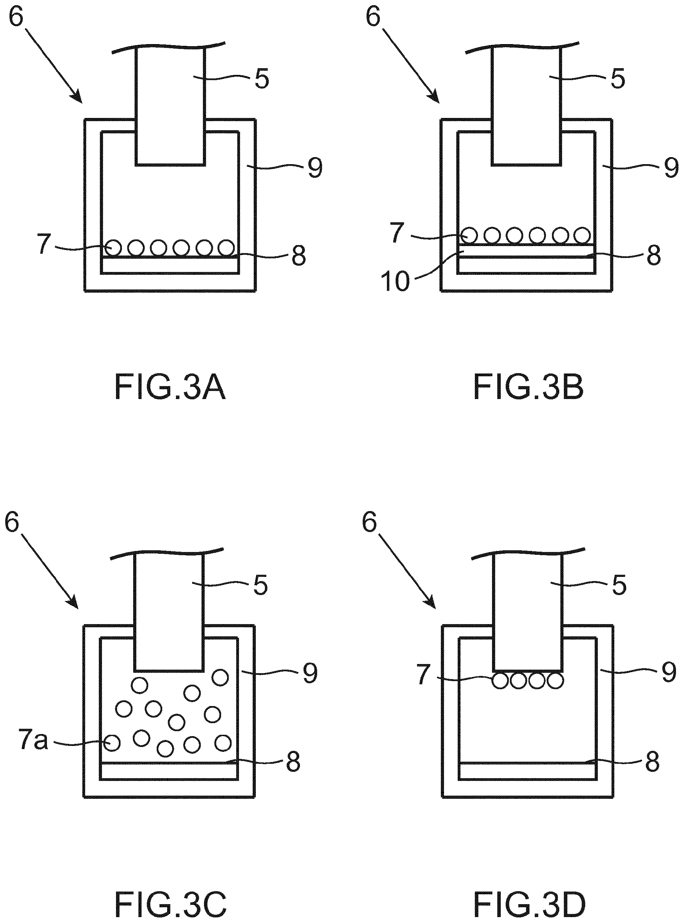

In one example, the nanoparticles (7) can be immobilized directly on the reflective surface (8) as illustrated in Fig. 3A. However, a transparent organic or inorganic film may separate nanoparticles from the reflective surface and wherein the film may bind nanoparticles. In the preferred embodiment, the nanoparticles can be immobilized on a substrate (10) placed on top the reflective surface as illustrated in Fig. 3B. The substrate (10) can be made of glass or any other material which is transparent.

Moreover, as exemplified in Fig. 3C, colloidal nanoparticles may be dispersed in the compartment. The nanoparticles can for example be dispersed in a solution or a gel which is contained in the compartment.

The present invention further relates to an end-cap connected to an optical fiber. End-caps connected to optical fibers can have the arrangements of nanoparticles as illustrated in Fig. 3A-3C, however, it is also possible to immobilize the nanoparticles (7) on the tip (i.e. distal end) of the optical fiber (5) as illustrated in Fig. 3D.

The nanoparticles illustrated in Fig. 3A-3D may be (but are not limited to) nanoparticles such as gold nanospheres, gold nanocubes, concave gold nanocubes, gold nanorods, gold nanoprisms, gold-coated silver nanoprisms, silver nanospheres, silver nanocubes and silver nanoplates.

### End-cap design

The end-cap can be made of any material which is inert and does not interact with nanoparticles, functionalized nanoparticles (i.e. ligand conjugated to nanoparticle) and/or analytes. The endcap housing (9) may comprise a first part (9a) and a second part (9b), wherein the first part (9a) has one or more apertures (*i.e.* openings) which allow analytes to enter the compartment. The example illustrated in Fig, 4 has four apertures, however, the number of and size of the apertures can be varied depending on (1) the type of analyte analyzed, (2) the tissue, organ or solution which the end-cap will enter, (3) the type of nanoparticles held in the compartment. The apertures can also be small enough to restrict free diffusion in or out of the compartment of species larger than the aperture size, thus making the end-cap housing (9) semi-permeable.

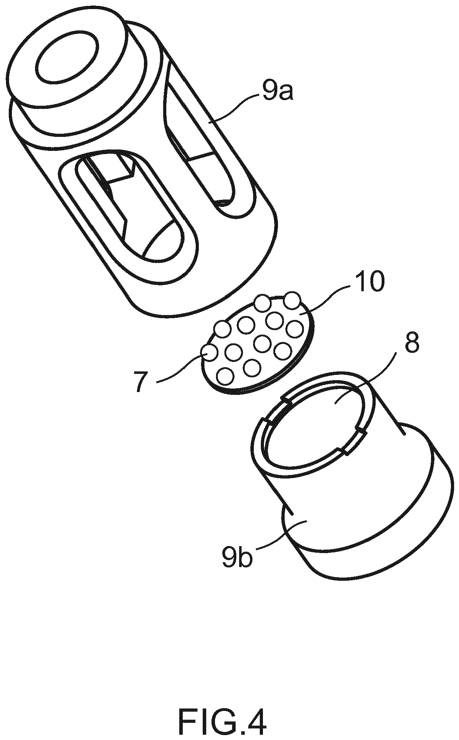

The second part of the end-cap has a reflective surface (8) and in the example illustrated in Fig. 4 a substrate carrying immobilized nanoparticles (7) is shown. The substrate (10) can be placed on top of the reflective surface (8) as shown in Fig, 3B, however in other examples, the substrate may be arranged at other parts of the compartment.

In an example of the present invention, the compartment is not sealed as illustrated in Fig. 4. However, the compartment may also be sealed by using membranes such as permeable membranes, semi-permeable membranes and dialysis membranes placed either inside or outside of the end-cap housing (9).

### Thermal regeneration

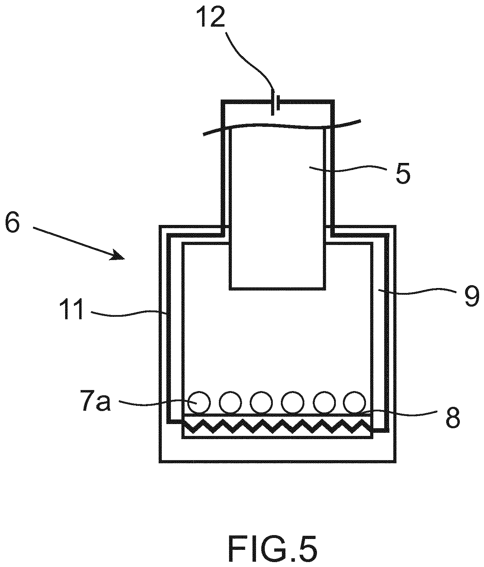

An example of the present disclosure is illustrated in Fig. 5 and relates to an end-cap (6) for being removably fitted to an optical fiber (5) wherein the end-cap comprises a reflecting surface (8), plasmonic nanoparticles (7) and an arrangement (11) for heating the end-cap. The heating enables thermal regeneration of sensor surfaces, i.e. reuse of the capture biomolecules (*i.e.* ligand). The arrangement (11) can be an integrated electric circuit (11) for inducing resistive heating.

Heating the end-cap can be used to disrupt the interaction between a ligand and an analyte in the end-cap functionalized on nanoparticles (7a) which results in releasing an analyte bound to the ligand. When the ligand is cooled, the ligand regains its activity (e.g. by re-folding) and the ligand can be reused. Consequently, the sensor can be recycled and thereby reused for binding an analyte.

Consequently, ligands such as DNA, antibodies and enzymes, conjugated to nanoparticles can be dehybridized and/or denatured, and thereby resulting in the ligand-nanoparticle conjugate being recycled and used multiple times.

It is important to note that the degree of temperature increase depends on the type of ligand-analyte interaction, i.e. it depends on the denaturation and dehybridization temperature of the ligands.

The heating can also be produced by optical heating wherein the heat can be induced by a second light source (such as laser) with a wavelength which overlaps well with the plasmonic band of the nanoparticles being used to conjugate the biomolecules.

### Plasmonic nanoparticle production

Methods for production of nanoparticles can be divided into two major production techniques: top-down fabrication and bottom-up assembly [4]. Top-down fabrication techniques utilize different lithographic methods in order to produce patterned nanostructures whereas bottom-up methods are based on the assembly of atoms, molecules, and other components into nanostructures either on substrates or in suspension.

### Fabrication of lithographic metal nanostructures

Top-down lithography methods, such as electron beam lithography, can produce plasmonic nanostructures with great control over the size, shape, and spacing of metal nanostructures. This enables a production of highly reproducible plasmonic substrates where the optical properties can be tuned, which allows for systematic investigations of various plasmonic applications such as Surface-Enhanced Raman Spectroscopy (SERS), Plasmon-Enhanced Fluorescence (PEF), and refractometric sensing. However, a major disadvantage of conventional lithography techniques is the problem to realize large areas with nanopatterns at a reasonable cost. Because of this reason, a technique called nanosphere lithography (NSL), which is an inexpensive nanofabrication method that enables production of larger nanopatterned areas, may be used instead. NSL utilize micron sized beads, made for instance by silica or polystyrene (PS), that are immobilized on a substrate and act as a mask during metal deposition. When removing the beads, a nanopattern is developed from the metal that was deposited in the voids between the beads. NSL can produce well-ordered arrays of nanostructures with uniform size and shape in a large format (>1 cm²) at relativity low cost.

Yet another technique that enables fabrication of nanostructures that show LSPR is by colloidal lithography. Similar to NSL, uniform beads (typically made by PS) are adsorbed on a substrate and used as a mask during evaporation of a thin metal film. Removal of the PS beads after metal evaporation gives rise to a metal film with well-defined plasmonic pores. The pores can further be used as mask to deposit plasmonic nanostructures on the underlying substrate, typically followed by lift-off of the porous mask. The latter technique is usually referred to as hole-mask colloidal lithography.

NSL and colloidal lithography are considered to be hybrid methods that utilizes both top-down fabrication and bottom-up assembly and are good example on how these two nanofabrication techniques have converged during the last decades. Today, both techniques can be used to create structures with nanometer precision in essentially the same size regime.

### Fabrication of colloidal metal nanoparticles

Compared to top-down lithographic techniques the bottom-up fabrication approach is generally a faster and cheaper way to produce nanoparticles for various applications. The bottom-up approach provides a huge flexibility and a large variety of structures can be created. The power of bottom-up strategies becomes very evident when looking at the structural and compositional complexity of natural materials and nanostructures.

The metal nanoparticles disclosed in the present invention have a range of different structures and morphologies, and are composed of either a single or several different materials, which provide nanostructures with unique optical properties. The metal particles may be produced by citrate reduction, seed-mediated-growth and photoinduced conversion synthesis described below. See Ref [4].

### Citrate reduction

The metal nanoparticles are synthesized by dissolving and reducing a metal salt in the presence of molecules that can prevent the nanoparticles from aggregating. The concentration ratio of reduction agent to metal salt affects the growth kinetics of the nanoparticles and thus affects their size. Often the reduction agent also stabilizes the nanoparticles thus filling a dual role.

One of the wet chemistry techniques used in the present invention is the production of metal nanoparticles is based on metal ion nucleation using citrate reduction. This method involves the use of gold chloride (HAuCl4) which is reduced by sodium citrate to generate fairly monodisperse gold nanoparticles in the size range of approximately 10 to 50 nm in diameter. In this procedure, citrate acts both as a reducing agent and electrostatic stabilizer where the size of the particles can be controlled by varying the ratio between the gold salt and the citrate. The reaction temperature is also important for the formation of the metal nanoparticles since both the reaction kinetics and oxidation potential are dependent upon the temperature. The excess of citrate anions forms a complex multilayer around the particles which prevent aggregation and gives the particles a net negative surface charge. The moderately weak coordination of citrate makes the particles amenable for surface functionalization with for example proteins or other biomolecules.

### Shape-controlled seed-mediated growth

Generally, the growth mechanism for metal nanoparticles can be divided into two steps, a nucleation followed by a controllable growth of the existing nuclei. If only metal salt and a reducing agent are added to the reaction, spherical nanoparticles will be formed since they possess the lowest surface energy.

In order to produce anisotropic nanoparticles the growth reaction needs to be directed to specific crystal facets which promote growth in a particular direction. In the present invention the shape-controlled synthesis of metal nanoparticles can be achieved by the seed-mediated growth method. In this method, tiny seeds are first created that act as nucleation sites. In the second step, a mild reducing agent (e.g. ascorbic acid) is used to facilitate further growth without initiating further nucleation, i.e. formation of new seeds. By adding various capping agents to the initial seeds that preferentially bind to specific crystal facets, the growth rate is reduced at these facets, guiding the growth of the nanoparticle into certain geometries. The size and shape of the particles are controlled by varying the type and concentration of the reagents used in the reaction as well as the reaction conditions.

A capping agent which may be used in order to control the shape of gold nanoparticles is an ionic surfactant called cetyltrimethylammonium (CTAX) where X=Cl- or Br-). CTAX may be employed for the synthesis of various gold nanoparticles with different geometries and thus different optical properties, including nanorods, nanocubes, nanostars (starshaped nanoparticles), and nanoprisms, which all show different LSPR frequencies.

CTAX binds very strongly to the metal nanoparticles, making it particularly hard to chemically replace the CTAX with other more biocompatible and biofunctional molecules. Moreover, CTAX is known to be highly cytotoxic. Various strategies have, however been examined in order to exchange the CTAX with different ligands to increase the biocompatibility and reduce the cytotoxicity. CTAX on gold nanorods may in be replaced with thiol-PEG (Polyethylene glycol), which result in a significantly lower cytotoxicity, thus enabling the usage of gold nanorods for *in vivo* applications.

### Photoinduced conversion synthesis

Anisotropic nanoparticles are particularly attractive for optical biosensing due to the presence of enhanced electromagnetic near-fields, especially around sharp edges and tips. Due to this reason, triangular nanoparticles or nanoprisms have gained a great deal of interest from the sensing community. Triangular silver nanoparticles and silver nanospheres can be transformed into triangular nanoprisms using a photoinduced conversion procedure. By irradiating a solution containing small silver nanospheres (∼8 nm in diameter) with visible light in the presence of sodium citrate and bis(psulfonatophenyl) phenylphosphine dihydrate dipotassium salt (BSPP), triangular nanoprisms are produced with an edge length of about 100 nm. The size of the nanoprisms could be controlled by varying the wavelength of the irradiation light. Consequently, since the optical properties are highly dependent on the structure and morphology of the nanoparticles, colloids with tunable LSPR bands and colors ranging from blue to red may be prepared.

Unfortunately, a major drawback with silver nanoparticles is that they can easily undergo oxidation, leading to structural changes which significantly affect their optical properties. Nanostructures with sharp-tip features like nanoprisms are especially sensitive since an oxidation leads to a truncation of the tips resulting in nanodiscs or nanoplates with reduced electromagnetic near-fields as compared to the prisms. In order to preserve the shape of the nanoprisms and retain their desirable optical properties a thin layer of gold can be deposited on the edges of the silver nanoprisms. By coating the silver nanoprisms with gold, their morphology and optical features are maintained and they exhibit a better stability against oxidation.

### Functionalization of metal nanoparticles

In order to convert metal nanoparticles to useful, hybrid materials for sensing, they typically need to be modified with some organic material that provides them with a desired functionality. A chemical modification of the metal surface is normally required in order to introduce specificity and to increase the biological compatibility of the metal nanoparticles in sensing applications. Functionalization of metal nanoparticles generally requires a modification or replacement of the stabilizing agent that is used in the synthesis to prevent the particles from aggregating. Thus, the new surface chemistry must maintain particle stability and at the same time provide the particles with new chemical properties and functionalities. Ligands (e.g. biomolecules) can be conjugated to nanoparticles through physisorption (noncovalent coupling) or by chemisorption (covalent coupling). This can be done directly on the metal surface or with the assistance of a bifunctional crosslinker. Regardless of the choice of conjugation method, it is a great challenge to achieve a surface chemistry where ligands are accessible for specific binding of analytes while preventing unspecific binding of other species present in the sample.

### Plasmonic biosensing

### Sensors and biosensors

In general, a sensor is defined as a device that detects physical or chemical changes (e.g. temperature, pressure, light, concentration etc.) in our environment and converts them into measurable signals.

A biosensor is a specific type of sensor that utilizes a biological, biomimetic or biologically derived reagent in the sensing system. Biosensors are composed of two central components; a detector, consisting of biorecognition elements used for analyte identification, and a transducer which converts biological interactions into a measurable signal.

The primary function of the biorecognition layer is to provide selectivity for the targets or analytes of interest. The biological elements incorporated in the biorecognition layer interact with specific analytes in the surrounding medium. Various classes of molecules have been exploited as biorecognition elements including enzymes, antibodies, peptides nucleic acids, receptors etc. In addition to specificity, these elements need to possess several other important properties in order to assure a high performance of the biosensing device including stability, functionality and availability, and in some applications, also reversibility.

The transducer responds to the biochemical interaction and transforms it into a measurable signal. The choice of transduction mechanism party depends on the signal that is generated by the interaction between the biorecognition element and the analyte. A large variety of transduction mechanisms have been exploited in biosensors, including electrochemical, mechanical, thermal, and optical. If quantification is required, the signal output from the transducer should be correlated to the concentration of the analyte of interest where the concentration span depends on the dynamic range of the sensing system. Many biosensing systems can also provide information about the binding affinity and kinetics for the interaction.

The present disclosure relates to optical transduction where visible and/or infrared light is used for signal detection. Optical transducers offer a broad range of signal parameters that can be utilized for detection including the frequency, phase, polarization, and intensity of the light. Optical transduction techniques can be exploited for many applications and can be constructed by rather simple and inexpensive components. Optical fibers enable miniaturization and optical imaging can be used for multiplex analysis of arrays.

### SPR-based biosensing

SPR-based sensing is one of the most exploited sensing and biosensing techniques and has been extensively used to monitor and characterize biomolecular interactions in real-time without the need for labelling.

SPR-based sensors are based on refractometric detection using the excitation of a surface plasmon. In general, one interaction partner (ligand) is immobilized on a thin metal film, usually gold, followed by the introduction of the second interaction partner in solution (analyte). The analyte binding results in a change in the refractive index close to the metal surface, which changes the resonance condition for surface plasmon excitation. This can be monitored in real-time by measuring changes in the reflected light used for excitation.

### LSPR-based refractometric biosensing

Similar to conventional SPR-based sensing, nanoparticles supporting a LSPR excitation can be used for refractometric sensing [4]. The condition for exiting electrons in metal nanoparticles and creating localized surface plasmon resonance, depends on the dielectric properties of the surrounding medium. This allows for a spectroscopic detection of molecular interactions that occurs in the local proximity of the metal nanoparticles. When the energy of the incident light matches the excitation energy of the electrons in the metal, a distinct peak known as the plasmon peak, can be seen in the optical extinction spectrum. By introducing molecules that induce a change of the refractive index in the surrounding environment, the resonance condition will be altered which results in a shift of the plasmon peak. The amount of material introduced around the metal nanoparticles can be estimated by measuring the quantity of the plasmon peak shift.

### Nanoplasmonic sensing

The excitation of localized surface plasmons in metallic nanoparticles using visible light makes nanoplasmonic materials especially attractive for optical sensing applications [4]. When incident light interacts with metal nanoparticles, the photons are either absorbed or scattered which is greatly enhanced at the resonance frequency which can be monitored using optical spectroscopy based either on extinction or scattering measurements. When this interaction occurs and light is confined and the energy is converted into a localized surface plasmon, a strong electromagnetic field is created in the direct vicinity of the nanoparticles. This highly localized field induced by the LSPR excitation makes metal nanostructures sensitive probes for detecting small, local variations in the surrounding environment.

A local change in the refractive index, *e.g.* due to adsorption of proteins or other biomolecules, can be detected since spectral changes occurs in the light used for LSPR excitation. This forms the basis of nanoplasmonic sensing a simple yet sensitive strategy for detecting biological or chemical interactions.

Nanoplasmonic sensing offers real-time, label-free molecular detection and shows a great potential for miniaturization and multiplexing due to the small dimensions of the metal nanoparticles. Refractometric sensing using plasmonic nanostructures have for example been used to detect biomarkers for Alzheimer's disease as well as for cancer. However, most clinically relevant biomarkers are present at very low concentrations, which mean that the sensitivity is a very important aspect to consider when developing bioanalytical sensing devices, in particular for diagnostics. Nanoplasmonic sensors are also employed for a wide number of non-medical applications, such as environmental pollution control, food testing and detection of chemical warfare agents and explosives. In all of these sensing applications, the sensitivity is of critical importance for the overall performance of the sensor system. Methods to improve the sensitivity in LSPR-based sensors have therefore been an area of intense research.

In nanoplasmonic refractometric sensing, the sensitivity for detecting small, local changes in the refractive close to the metal nanoparticles is commonly defined and measured as changes in either the plasmon peak position or intensity per refractive index unit (RIU). These measurements are normally performed by monitoring the spectral changes that occurs when plasmonic materials are exposed to solutions with a known refractive index. The sensitivity is highly dependent on the nature of the plasmonic nanoparticles i.e. their size, shape, and metal composition but also on the interaction with other metal nanoparticles. Thus, there are several parameters that influence the sensitivity and by varying the structure, morphology, and surroundings of the plasmonic nanoparticle it is possible to tune the sensitivity and hence, improve the performance of a nanoplasmonic sensing system based on refractive index detection.

### EXAMPLES

### Optical instrumentation setup

The optical instrumentation setup comprises a light source with the range 360-2500 nm (Ocean optics HL-2000-HP-FHSA), a spectrophotometer (Ocean Optics QE65 Pro), optical fiber (Ocean Optics BIFBORO-1000µm-2m) and an end-cap.

The end-cap is connected to a SMA optical fiber connector. A reflecting surface (Edmund Optics, ø5 mm, λ4-6 mirror, enhanced aluminum) is placed inside the 3D-printed end-cap. Gold nanospheres (ø50 nm, BBI Solutions) are electrostatically immobilized (4h) on a ø5mm glass substrate using polyelectrolytes. The substrate is placed on top of the reflective surface inside the end-cap.

### Example 1

An end-cap prototype (FIG. 4) was designed to fit on a SMA fiber connector and was manufactured by 3D-printing. A ø5 mm substrate with a reflective surface (thin aluminum) was purchased from Edmund Optics and placed inside one of the two parts of the end-cap prototype. A ø5 mm glass substrate (VWR International) was immobilized with gold nanospheres (Au-NPs, 50nm, BBI solutions) and placed on top of the reflective surface. The glass substrates were cleaned in a solution containing a 5:1:1 mixture by volume of Milli-Q water, 30% hydrogen peroxide (Merck KGaA) and 25% ammonia (Merck KGaA) for at least 20 min at 85° C and thoroughly rinsed with Milli-Q water. A layer-by-layer assembly of polyelectrolytes (PEs) was used to immobilize Au-NPs on the glass substrate. Polyelectrolyte solutions of polyethylenimine (PEI, Mw 750 000, Sigma-Aldrich), polystyrene sulfonate (PSS, Mw 75 000, Sigma-Aldrich) and polyallylamine hydrochloride (PAH, Mw 56 000, Sigma-Aldrich) were prepared with a concentration of 2 mg/ml in 0.5 M NaCl (Sigma-Aldrich) aqueous solutions. The substrates were incubated with 20 µl of polyelectrolyte solutions for 15 min in the order PEI/PSS/PAH/PSS/PAH with a thorough rinsing of Milli-Q water between each deposition. 20 µl of Au-NP solution was deposited onto the glass substrates for 4h and rinsed with Milli-Q water. Nanoparticles were immobilized onto the end-face of an optical fiber (ø1000µm, ocean optics) using the same immobilization strategy, where the fiber was cleaved, polished and the end-face was cleaned and functionalized with polyelectrolytes followed by nanoparticle deposition (4h).

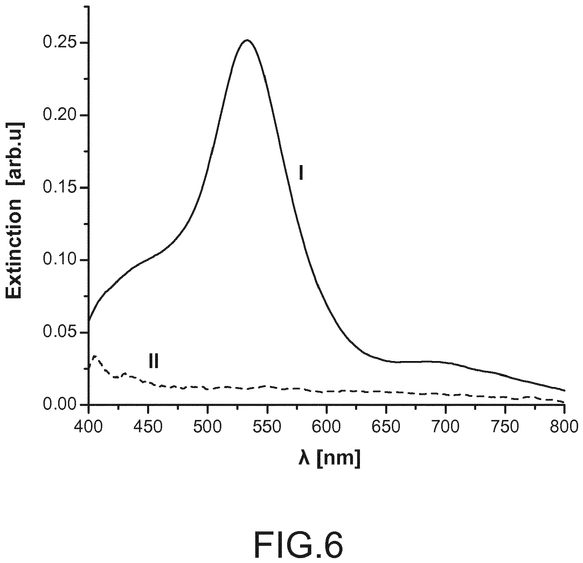

The substrate covered with Au-NPs was placed inside the end-cap, which was then attached to the SMA connector of the common end of a bifurcated optical fiber (BIFORO, ø1000 µm, 2 m, Ocean Optics). The two other fiber ends were connected to a light source (HL-2000-HP-FHSA, 360-2500 nm, 20 w, Ocean Optics) and a detector (QE65 Pro, Ocean Optics), respectively. A references spectrum was acquired from the end-cap without the substrate coated with Au-NPs inside the end-cap. Extinction measurements were then performed in water by subtracting the reference spectrum from the signal acquired with the Au-NP coated substrate placed inside the end-cap. The signal was analyzed using the software SpectraSuite (Ocean Optics). The results are shown in Fig. 6.

Figure 6 shows light extinction spectra of a signal (I) obtained in water using an end-cap prototype with an integrated substrate covered with gold nanospheres (Au-NP, diameter 50 nm), and a signal (II) obtained in water from a free optical fiber with gold nanospheres immobilized directly to the end of the optical fiber core. A significantly better signal-to-noise ratio is achieved using the end-cap setup. Y-axis: light extinction (arbitrary unit, arb.u). A measurement with nanoparticles is compared to a measurement without nanoparticles. X-axis: light wavelength (nanometer, nm).

Experiments with Au-NPs immobilized directly to an optical fiber were performed in a similar way as with the end-cap but the free fiber was connected to the bifurcated fiber using an SMA to SMA adapter (Thorlabs).

### Example 2

The measurements were performed as described in Example 1. A spectrum was acquired from a glass substrate coated with Au-NPs in air using the end-cap prototype. The glass substrate was then coated with Bovine Serum Albumine (BSA, 1 mg/ml in water, Sigma-Aldrich) for 1h and rinsed with Milli-q water. A new spectrum was acquired (in air) where a shift of the plasmon peak position could be seen compared to the substrate without BSA.

A software (LabView 2015, National Instruments) was developed that enables real-time detection of local refractive index changes around gold nanoparticles over time by monitoring the shift in the position of the plasmon peak maximum in the extinction spectra.

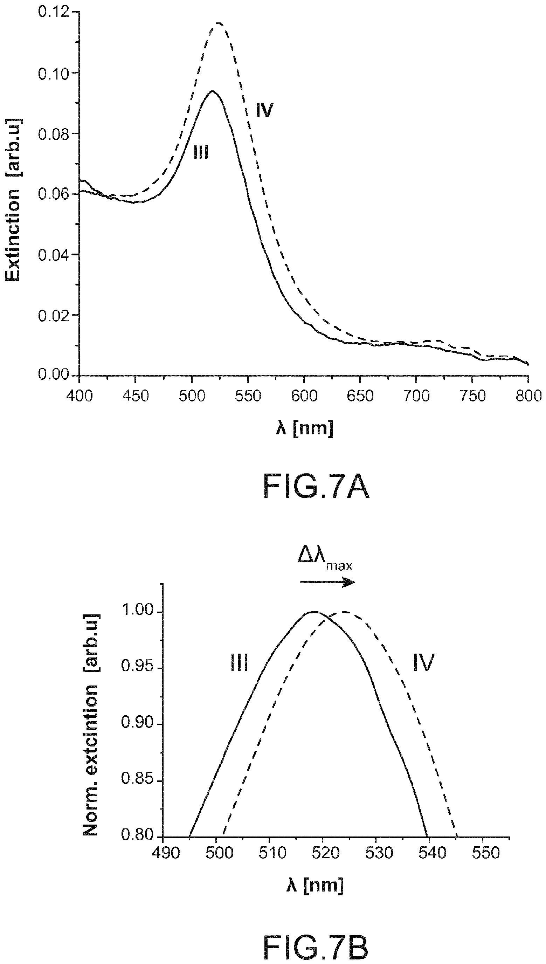

Figure 7A shows light extinction spectra obtained in air using an end-cap prototype with an integrated substrate covered with gold nanospheres (Au-NP, diameter 50 nm), before (III) and after (IV) addition of a protein (Bovine Serum Albumine, BSA). Y-axis: light extinction (arbitrary unit, arb.u). A measurement with nanoparticles is compared to a measurement without nanoparticles. X-axis: light wavelength (nanometer, nm)

Figure 7B shows a zoom-in of the spectra in FIG. 7A with normalized intensity to demonstrate the wavelength shift of the plasmon peak position that occurs after addition of BSA. Y-axis: light extinction (arbitrary unit, arb.u). A measurement with nanoparticles is compared to a measurement without nanoparticles. X-axis: light wavelength (nanometer, nm)

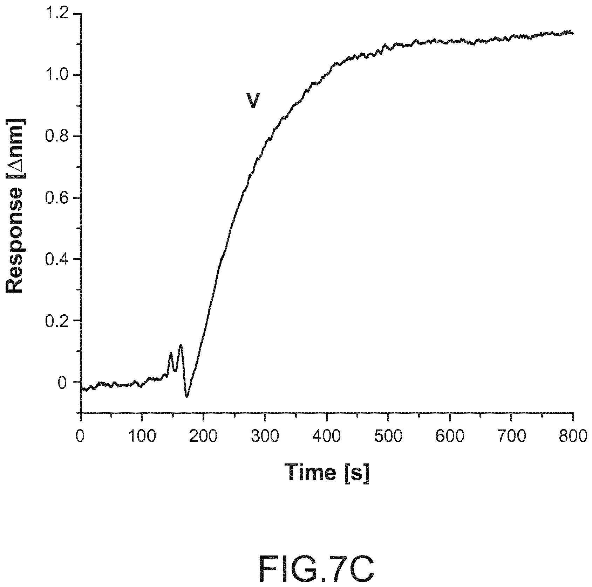

Figure 7C shows adsorption of BSA (0.5 mg/ml in water, Sigma-Aldrich) to gold nanospheres (Au-NP, diameter 50 nm) acquired in real-time using an end-cap prototype. Y-axis: change in plasmon peak maximum position (response, Δnm). X-axis: time (seconds, s)

### Example 3 - Antibody detection

Manufacturing of therapeutic antibodies is extremely costly, labour intense and requires vast amount of resources in terms of development and optimization of the production and purification process. Consequently, the products become very expensive and practically unaffordable to a large part of the global population as well as a large burden to already strained healthcare budgets. To facilitate for the healthcare system to take on new biologics, there is hence a great need to reduce the costs by increasing productivity and yield in the production processes. This can only be achieved by implementing continuous processes, which enhances process intensification, integrated process steps, fewer by-products, smaller plants with lesser space volumes, energy consumption and personnel efforts, as well as significantly lower investments in process equipment and process installation.

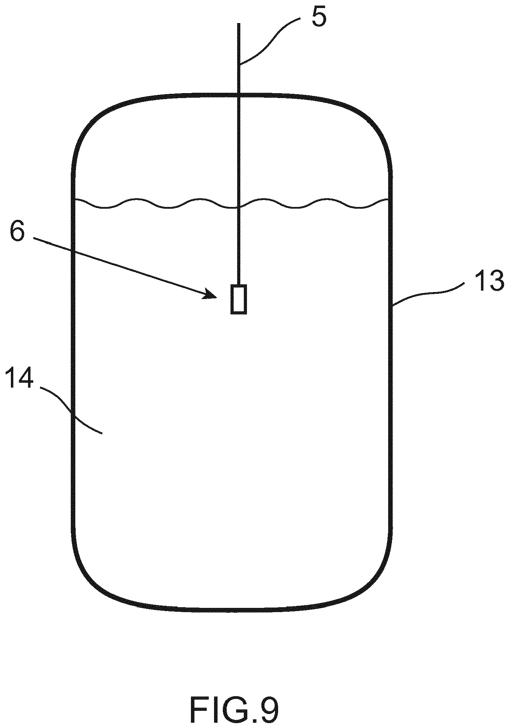

An optical fiber sensor based on LSPR is a highly suitable sensor technology for realization of an in-line system for real-time monitoring of biological production. LSPR in combination with optical fibers enables a compact and flexible sensor design with high sensitivity that allows for integration in standard process equipment as well as integration into single-use bioreactors and single-use downstream separation units. Figure 9 shows a schematic illustration of an optical fiber sensor integrated in a bioreactor chamber (13) for in situ monitoring in cell culture media (14).

Molecular specificity is attained by functionalizing gold nanoparticles with a receptor (ligand) that can interact with a specific target (e.g. antibodies, proteins etc.). Consequently, a single molecular target can be selectively detected in a complex medium by introducing ligands on the gold nanoparticle surface. The affinity i.e. the binding strength between ligand and target, is an important factor for the detection of a molecular target.

Different concentrations of Immunoglobulin G (IgG) were detected using gold nanoparticles functionalized with a peptide receptor (affibody) with a strong affinity (nM) for IgG. Surface preparations were performed as in Example 1 followed by a 1h peptide incubation (10 µM). Experiments were performed as in Example 2 using a software written in Lab View for real-time analysis of the peptide-IgG interaction.

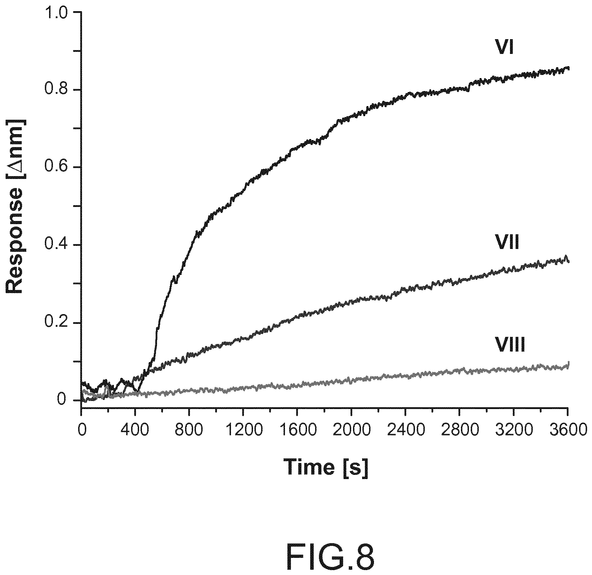

Figure 8 shows binding curves of immunoglobulin G (IgG) on gold nanospheres (Au-NP, diameter 50 nm) functionalized with a peptide receptor for three different concentrations of IgG, 100 nM (VI), 50 nM (VII) and 25 nM (VIII). Y-axis: change in plasmon peak maximum position (response, Δnm). X-axis: time (seconds, s)

### Example 4 - Detection of periodontitis

Peptides are ideal candidates as receptors for selective recognition of proteolytic enzymes such as gingipains. Peptides that contain proteolytic recognition sites and that can be cleaved when immobilized on both planar substrates and Au-NPs may be utilized for Au-NP-based detection of proteolytic enzymes. Since *P. gingivalis* has crucial roles in both the bacterial survival and the pathogenesis of periodontitis, the proteolytic gingipains are ideal diagnostic biomarkers.

Since the present example will focus on detection of gingipains RgpA, RgpB, and Kgp that cleave Arg-Xaa and Lys-Xaa peptide bonds, respectively, the peptide-based receptors will thus contain these specific recognition motifs. The receptors are also be modified with suitable anchoring moieties such as thiols for immobilization on Au-NPs and other substrates, biotins and spacer sequences in order to obtain receptors capable of recognizing the target enzymes and inducing a significant sensor response.

Peptides are synthesized on the solid phase (SPPS) using a peptide synthesizer and standard F-moc chemistry, purified on HPLC and identified by MALDI-TOF. SPPS enable incorporation of both D- and L- amino acids, which has been demonstrated to be of importance for obtaining peptide substrates with high specificity for *P. gingivalis.* Specificity and rate of proteolytic hydrolyzation of receptors is evaluated and optimized using *P. gingivalis* wildtype strains as well as various gingipain mutant strains.

Using a LSPR sensor based on a fiber optical probe Rgp/Kgp activity is measured *in situ* in saliva and directly in the dental pockets. The setup will be based on a multimode 2x1 optical fiber that will be connected to a white light source and a simple spectrophotometer such as Oceans Optics. The end-cap according to the present invention is modified with Au-NPs (commercial and/or synthesized in house) using polyelectrolyte adhesion layers. For recognition the Au-NPs is functionalized with thiol-terminated peptide receptors designed to produce a large RI shift when cleaved by the target proteases. Since peptides are relatively small, the RI shift is amplified by attaching commercially available 1-2 nm mono-functionalized Au-NPs at the peptide C-terminus that is removed upon peptide hydrolyzation. Several receptors may be immobilized on the same end-cap to simultaneously assess multiple biomarkers.

The robustness of both the peptide receptors and the surface chemistry permit sterilization of the optical fiber and end-cap according to European Standards1 and guarantee a long shelf life. All steps in the fabrication process rely on self-assembly, and tedious and costly covalent coupling chemistries and the use of organic solvents is thus avoided completely.

### Example 5- Insulin biosensor

Today, more than 371 million people are diabetic and the number of people who suffer from the disease is increasing every day. Until 2030, the number of diabetics is estimate to be 552 million worldwide. Type 2 diabetes, which is the most common variant of diabetes, is increasing due to a rising number of people with obesity and an increasingly aging population. With an ever-increasing population of diabetics, the need increases for development of treatments and medications to alleviate the effects of diabetes for those who are affected. With increased diabetes research also the need of testing for diabetes will increase, and therefore, the number of clinical trials of type 2 diabetes will also increase. To conduct a clinical study for the development of drugs for type 2 diabetes patients often costs more than a hundred million dollars. With such a cost structure, small cost savings lead to huge impact, which is why it should be of great interest with new methods to more effectively measure insulin levels in patients.

The insulin biosensor according to the present invention is a device which enables continuous measurement of insulin *in vivo.* Hence, no blood samples are need to be taken, and moreover, several sample do not need to be taken in order to monitor changes in insulin levels over time.

The device is based on LSPR and measures the number of chemical reactions, i.e. the number of insulin binding. The insulin biosensor comprises an end-cap according to the present invention wherein the end-cap is covered with gold nanoparticles to which ligands (*e.g.* antibodies) are attached. The ligands bind to insulin and the change in resonance depends on the amount of insulin molecules that is bounded to the ligands.

Once a ligand has bound to an insulin molecule, it cannot bind to other insulin molecules. However, continuous measurement is made possible by heating up the nanoparticles. When the nanoparticles become hot the ligands deform and thereby release bound insulin; this is referred to as thermal regeneration in the present invention. Ligands recover and regain their activity when the temperature is lowered and can bind new insulin molecules and the next measurement can be achieved.

Since the measurement takes place *in vivo,* assays are not limited to measuring blood insulin levels by analyzing a single blood sample. Instead, the end-cap may be inserted into muscles or other tissues of interest. Consequently, changes in insulin can effectively be detected at very early stages.

### REFERENCES

1. Camara, A.R. et al., Dengue immunoassay with an LSPR fiber optic sensor. Optics Express, Nov 4; 21(22): 27023-27031
2. Jeong, H-H et al., Real-time label-free immunoassay of interferon-gamma and prostata-specific antigen using a Fiber-Optic Localized-Surface Plasmon Resonance sensor. Biosensors and Bioelectronics, 2013 Jan 15; 39(1): 346-351
3. Sciacca, B. et al., Dip biosensor based on localized surface plasmon resonance at the tip of an optical fiber, 2014, Jan 28; 30(3), 946-954
4. Martinsson, E., Nanoplasmonic sensing using metal nanoparticles, 2014, Linköping Studies in Science and Technology Dissertation No. 1624

## Claims

1. End-cap (6) for being connected to an optical fiber (5) of a localized surface plasmon resonance (LSPR) sensor, wherein said end-cap comprises a housing (9), a reflecting surface (8), a compartment and plasmonic nanoparticles (7), wherein said nanoparticles (7) are selected from lithographic metal nanostructures, metal nanoparticles and semiconductor nanocrystals, or a combination thereof
**characterized in that**
the end-cap further comprises an arrangement for thermal regeneration wherein said thermal regeneration is induced by optical or resistive heating, and a substrate (10), wherein said nanoparticles are immobilized on the surface of said substrate (10), wherein said substrate is removable, wherein said substrate is transparent, and wherein said substrate is placed on top of the reflective surface (8).

2. End-cap according to the previous claim, wherein said compartment is sealed with a membrane, wherein said membrane is preferably selected from a permeable membrane, a semi-permeable membrane and dialysis membrane, and wherein said membrane is inside or outside of the end-cap housing.

3. End-cap according to any one of the previous claims, wherein a said reflective surface (8) comprises metal, polymer and/or glass, and wherein said metal is selected from silver, gold and aluminum.

4. End-cap according to any one of the previous claim, wherein said nanoparticles are metal nanoparticles, preferably selected from are gold, silver, aluminum, copper platinum and palladium nanoparticles, or combinations thereof.

5. End-cap according to any one of previous claims, wherein the shape of the nanoparticles is selected from a sphere, rod, disk, triangle, cube, star, plate, prism, ellipse, wire, shell, core-shell, rice, ring, or created by a hole in a metal film.

6. End-cap according to any one of previous claims, wherein said end-cap is configured to be used *in vivo* or *in situ* qualitative and quantitative analysis.

7. End-cap according to any one of previous claims, wherein said end-cap is removable.

8. End-cap according to any one of the previous claim, comprising an integrated electric circuit (11) for inducing resistive heating.

9. Localized surface plasmon resonance (LSPR) sensor, comprising an end-cap (6) according to any one of previous claims.

10. End-cap connected to an optical fiber, wherein said end-cap is according to any one of claims 1-8.

11. Optical fiber device comprising an end-cap according to any one of claim 1-8.

12. Optical fiber device according to the previous claim further comprising a detector (2), at least one optical fiber, light source (1), wherein said end-cap (6) is located at the end of said at least one optical fiber.

13. Optical fiber device according to claim 12, wherein
a. the light source (1) is arranged to transmit light in the visible or in the near-infrared region,
b. at least one optical fiber is arranged to guide the light to the end-cap (6) in which the light passes through the nanoparticles (7),
c. the reflecting surface (8) is arranged to reflect said light, wherein the light once again passes the nanoparticles (7) and reaches the detector via at least one optical fiber,
d. the detector (2) is arranged to detect the light reflected from the end-cap.

14. Optical fiber device according to any one of previous claims 12 or 13, further comprising a second light source for inducing optical heating of the end-cap, wherein the wavelength of the second light source is configured to overlap with the plasmonic band of the nanoparticles.

## Patentansprüche

1. Endkappe (6) zum Verbunden werden mit einer optischen Faser (5) eines lokalisierten Oberflächenplasmonenresonanz (LSPR) - Sensors, wobei die Endkappe ein Gehäuse (9), eine reflektierende Oberfläche (8), ein Abteil und plasmonische Nanopartikel (7) umfasst, wobei die Nanopartikel aus lithographischen Metallnanostrukturen, Metallnanopartikeln und Halbleiternanokristallen oder einer Kombination davon ausgewählt sind,
**dadurch gekennzeichnet, dass**
die Endkappe (6) weiter eine Anordnung zur thermischen Regeneration, wobei die thermische Regeneration durch optisches oder resistives Heizen induziert wird, und ein Substrat (10) umfasst, wobei die Nanopartikel auf der Oberfläche des Substrats (10) immobilisiert sind, wobei das Substrat abnehmbar ist, wobei das Substrat transparent ist und wobei das Substrat oben auf der reflektiven Oberfläche (8) platziert ist.

2. Endkappe nach dem vorstehenden Anspruch, wobei das Abteil mit einer Membran abgedichtet ist, wobei die Membran vorzugsweise aus einer permeablen Membran, einer semipermeablen Membran und einer Dialysemembran ausgewählt ist und wobei die Membran sich innerhalb oder außerhalb des Endkappengehäuses befindet.

3. Endkappe nach einem der vorstehenden Ansprüche, wobei die reflektive Oberfläche (8) Metall, Polymer und/oder Glas umfasst und wobei das Metall aus Silber, Gold und Aluminium ausgewählt ist.

4. Endkappe nach einem der vorstehenden Ansprüche, wobei die Nanopartikel Metallnanopartikel sind, die vorzugsweise aus Gold-, Silber-, Aluminium-, Kupfer-, Platin- und Palladiumnanopartikeln oder Kombinationen davon ausgewählt sind.

5. Endkappe nach einem der vorstehenden Ansprüche, wobei die Form der Nanopartikel aus einer Kugel, Stange, Scheibe, Dreieck, Würfel, Stern, Platte, Prisma, Ellipse, Draht, Schale, Kern-Schale, Reis, Ring ausgewählt ist oder durch ein Loch in einer Metallfolie erschaffen ist.

6. Endkappe nach einem der vorstehenden Ansprüche, wobei die Endkappe dafür eingerichtet ist, *in vivo* oder *in situ* bei qualitativer und quantitativer Analyse verwendet zu werden.

7. Endkappe nach einem der vorstehenden Ansprüche, wobei die Endkappe abnehmbar ist.

8. Endkappe nach einem der vorstehenden Ansprüche, umfassend eine integrierte elektrische Schaltung (11) zum Induzieren von resistiver Heizung.

9. Lokalisierte Oberflächenplasmonenresonanz (LSPR) - Sensor, umfassend eine Endkappe (6) nach einem der vorstehenden Ansprüche.

10. Endkappe, die mit einer optischen Faser verbunden ist, wobei die Endkappe nach einem der Ansprüche 1-8 ist.

11. Optische Faservorrichtung, umfassend eine Endkappe nach einem der Ansprüche 1-8.

12. Optische Faservorrichtung nach dem vorstehenden Anspruch, weiter umfassend einen Detektor (2), mindestens eine optische Faser, eine Lichtquelle (1), wobei die Endkappe (6) an dem Ende der mindestens einen optischen Faser verortet ist.

13. Optische Faservorrichtung nach Anspruch 12, wobei
a. die Lichtquelle (1) dafür angeordnet ist, Licht in der sichtbaren oder in der Nahinfrarotregion zu übertragen,
b. die mindestens eine optische Faser dafür angeordnet ist, das Licht zu der Endkappe (6) zu leiten, in der das Licht durch die Nanopartikel (7) hindurch passiert,
c. die reflektierende Oberfläche (8) dafür angeordnet ist, das Licht zu reflektieren, wobei das Licht erneut die Nanopartikel (7) passiert und den Detektor über mindestens eine optische Faser erreicht,
d. der Detektor (2) dafür angeordnet ist, das von der Endkappe reflektierte Licht zu detektieren.

14. Optische Faservorrichtung nach einem der vorstehenden Ansprüche 12 oder 13, weiter umfassend
eine zweite Lichtquelle zum Induzieren von optischem Heizen der Endkappe, wobei die Wellenlänge der zweiten Lichtquelle dafür eingerichtet ist, mit der Plasmonenbande der Nanopartikel zu überlappen.

## Revendications

1. Capuchon d'extrémité (6) destiné à être connecté à une fibre optique (5) d'un capteur de résonance plasmonique de surface localisée (LSPR), dans lequel ledit capuchon d'extrémité comprend un boîtier (9), une surface réfléchissante (8), un compartiment et des nanoparticules plasmoniques (7) dans lequel
lesdites nanoparticules sont choisies parmi des nanostructures métalliques lithographiques, des nanoparticules métalliques et des nanocristaux à semi-conducteur, ou une combinaison de ceux-ci,
**caractérisé en ce que**
le capuchon d'extrémité (6) comprend en outre un agencement pour la régénération thermique dans lequel ladite régénération thermique est induite par chauffage optique ou résistif, et un substrat (10), dans lequel lesdites nanoparticules sont immobilisées sur la surface dudit substrat (10), dans lequel ledit substrat est amovible, dans lequel ledit substrat est transparent et dans lequel ledit substrat est placé sur le dessus de la surface réfléchissante (8).

2. Capuchon d'extrémité selon la revendication précédente, dans lequel ledit compartiment est scellé par une membrane, dans lequel ladite membrane est de préférence choisie parmi une membrane perméable, une membrane semi-perméable et une membrane de dialyse, et dans lequel ladite membrane est à l'intérieur ou à l'extérieur du boîtier de capuchon d'extrémité.

3. Capuchon d'extrémité selon l'une quelconque des revendications précédentes, dans lequel une dite surface réfléchissante (8) comprend un métal, un polymère et/ou du verre, et dans lequel ledit métal est choisi parmi l'argent, l'or et l'aluminium.

4. Capuchon d'extrémité selon l'une quelconque des revendications précédentes, dans lequel lesdites nanoparticules sont des nanoparticules métalliques, de préférence choisies parmi des nanoparticules d'or, d'argent, d'aluminium, de cuivre-platine et de palladium, ou des combinaisons de celles-ci.

5. Capuchon d'extrémité selon l'une quelconque des revendications précédentes, dans lequel la forme des nanoparticules est choisie parmi une sphère, une tige, un disque, un triangle, un cube, une étoile, une plaque, un prisme, une ellipse, un câble, une enveloppe, un noyau-enveloppe, un grain de riz, ou créée par un trou dans un film métallique.

6. Capuchon d'extrémité selon l'une quelconque des revendications précédentes, dans lequel ledit capuchon d'extrémité est configuré pour être utilisé dans une analyse qualitative et quantitative *in vivo* ou *in situ.*

7. Capuchon d'extrémité selon l'une quelconque des revendications précédentes, dans lequel ledit capuchon d'extrémité est amovible.

8. Capuchon d'extrémité selon l'une quelconque des revendications précédentes, comprenant un circuit électrique intégré (11) pour induire un chauffage résistif.

9. Capteur de résonance plasmonique de surface localisée (LSPR), comprenant un capuchon d'extrémité (6) selon l'une quelconque des revendications précédentes.

10. Capuchon d'extrémité connecté à une fibre optique, dans lequel ledit capuchon d'extrémité est selon l'une quelconque des revendications 1 à 8.

11. Dispositif à fibre optique comprenant un capuchon d'extrémité selon l'une quelconque des revendications 1 à 8.

12. Dispositif à fibre optique selon la revendication précédente comprenant en outre un détecteur (2), au moins une fibre optique, une source de lumière (1), dans lequel ledit capuchon d'extrémité (6) est situé au niveau de l'extrémité de ladite au moins une fibre optique.

13. Dispositif à fibre optique selon la revendication 12, dans lequel
a. la source de lumière (1) est agencée pour transmettre la lumière dans la région visible ou proche-infrarouge,
b. au moins une fibre optique est agencée pour guider la lumière vers le capuchon d'extrémité (6) dans lequel la lumière traverse les nanoparticules (7),
c. la surface réfléchissante (8) est agencée pour réfléchir ladite lumière, dans lequel la lumière traverse de nouveau les nanoparticules (7) et atteint le détecteur par l'intermédiaire d'au moins une fibre optique,
d. le détecteur (2) est agencé pour détecter la lumière réfléchie par le capuchon d'extrémité.

14. Dispositif à fibre optique selon l'une quelconque des revendications précédentes 12 ou 13, comprenant en outre une seconde source de lumière pour induire un chauffage optique du capuchon d'extrémité, dans lequel la longueur d'onde de la seconde source de lumière est configurée pour chevaucher la bande plasmonique des nanoparticules.
